# EUROPÄISCHE PATENTSCHRIFT

(11) **EP 0 712 799 B1**
(45) Veröffentlichungstag und Bekanntmachung des Hinweises auf die Patenterteilung: **21.04.1999**
(21) Anmeldenummer: 95810700.5
(22) Anmeldetag: 08.11.1995
(51) Int. Cl.: B65G 47/38

(54) **Verteilförderer für Stückgut**
Distributing conveyor for articles
Transporteur de distribution pour des objets

(30) Priorität: 16.11.1994 CH 3437/94
(43) Veröffentlichungstag der Anmeldung: 22.05.1996
(73) Patentinhaber: GRAPHA-HOLDING AG, 6052 Hergiswil (CH)
(72) Erfinder: Maier, Willi, CH-8302 KLoten (CH)

(56) Entgegenhaltungen:
- DE-C- 415 773
- FR-A- 2 179 902
- GB-A- 2 117 341
- US-A- 3 147 845
- US-A- 4 004 681

## Beschreibung

Die Erfindung betrifft einen Verteilförderer für Stückgut, mit einer Vielzahl längs einer endlosen Bahn umlaufenden Wagen, die eine Tragvorrichtung mit einer zur Aufnahme des Stückgutes bestimmten, durch eine Stützvorrichtung gegen eine Federkraft in einer horizontalen Lage abgestützten und an vorbestimmten Entladestellen in einer Richtung neigbaren Platte oder einen Plattenteil aufweisen.

Ein gattungsgleicher Verteilförderer ist im Stand der Technik durch die WO 90/09944 bekannt geworden. Bei diesem Verteilförderer beitzt jeder Wagen eine Tragplatte, die um eine horizontale Achse an vorbestimmten Entladestellen auf die eine oder andere Seite der Bahn neigbar ist. Zum wahlweisen Neigen einer Tragplatte ist unterhalb dieser an jeder Seite jeweils ein Stützbein angelenkt, das an dem gegenüberliegenden Ende eine über eine Weiche einer Steuerkulisse zustellbare Rolle aufweist.

Durch die GB - A - 2 117 341 ist ein Fördersystem zum Fördern und Sortieren von relativ kleinen und leichten Gegenständen bekannt geworden, die eine in einer Führungsschiene angetriebene Förderkette mit seitlich abstehenden Haltern aufweist, an denen seitlich zur Fortbewegungsrichtung abkippbare Schalen befestigt sind. Die Betätigung der Schalen erfolgt nach Messen und Vergleichen der Gegenstände durch ein die Kippbewegung auslösendes Ventil, das ein Entriegeln einer die Schale in Horizontallage haltende Klinke bewirkt.

Die FR - A - 2 179 902 vermittelt eine Fördereinrichtung, die an einer umlaufenden Kette befestigte Wagen für den Transport von Stückgütern aufweist. Zu diesem Zweck sind auf einem Fahrgestell des Wagens seitlich kippbare Mulden aufgebaut, die an einer bestimmten Stelle der Bahn in eine Kippbewegung versetzt werden. Die Kippachse der Mulde befindet sich an der Unterseite der Mulde in deren Längsmittelachse und Anschläge an dem Fahrgestell begrenzen die seitliche Neigung der Mulde. Die Kippbewegung der Mulden wird durch Entriegelung einer der auf beiden Seiten der Längsmittelachse des Fahrgestells angeordneten Verriegelungsvorrichtungen über eine Kulisse ausgelöst.

Ueberdies ist das Stützbein mit einer etwa mittig angeordneten Führungsrolle in einer Führungskulisse gehalten, die die Horizontallage sowie die Neigungslage der Tragplatte bestimmt. An den Entladestellen beanspruchen die Kulissen entlang der Bahn eine vergleichsweise lange Strecke, welche den minimalen Abstand zwischen benachbarten Entladestellen bestimmt.

Der Erfindung liegt die Aufgabe zugrunde, einen Verteilförderer der genannten Gattung zu schaffen, der wesentlich kostengünstiger herstellbar und der dennoch funktionstüchtig ist.

Diese Aufgabe ist durch einem Verteilförderer nach Anspruch 1 gelöst. Beim erfindungsgemässen Verteilförderer muss beim Entladen an einer Entladestelle ledigleich die Stützvorrrichtung gelöst werden, wonach die Platte oder der Plattenteil durch die freigewordene Spannkraft sofort geneigt wird. Kulissen an Entladestellen können damit entfallen und entsprechend der Abstand zwischen benachbarten Entladestellen wesentlich kürzer als bisher gewählt werden. Die einfache Betätigung ohne Kulisse ermöglicht die Anordnung von mehreren Teilplatten an einer Tragvorrichtung. Bei beispielsweise zwei an jeder Seite angeordneten Tragplatten können gleichzeitig jeweils links und rechts der Bahn je ein Stückgut ausgeschleust werden. Vorteilhafte Weiterbildungen der Erfindung sind Gegenstand der abhängigen Patentansprüche.

Zwei Ausführungsbeispiele der Erfindung werden nachfolgend anhand der Zeichnung näher erläutert. Es zeigen:
- Fig. 1: schematisch eine teilweise geschnittene Ansicht eines Wagens und einer Auslösevorrichtung einer Entladestelle,
- Fig. 2: schematisch eine Draufsicht auf einen Teil dieses erfindungsgemässen Verteilförderers,
- Fig. 3: eine Ansicht einer Auslösevorrichtung,
- Fig. 4: eine Ansicht eines Wagens nach einer Variante,
- Fig. 5: eine Draufsicht auf einen Verteilförderer mit Wagen gemäss Figur 4,
- Fig. 6: eine Draufsicht auf einen weiteren Abschnitt des Verteilförderers gemäss Figur 5, und
- Fig. 7: schematisch die Ansicht einer Schalenrückstellung.

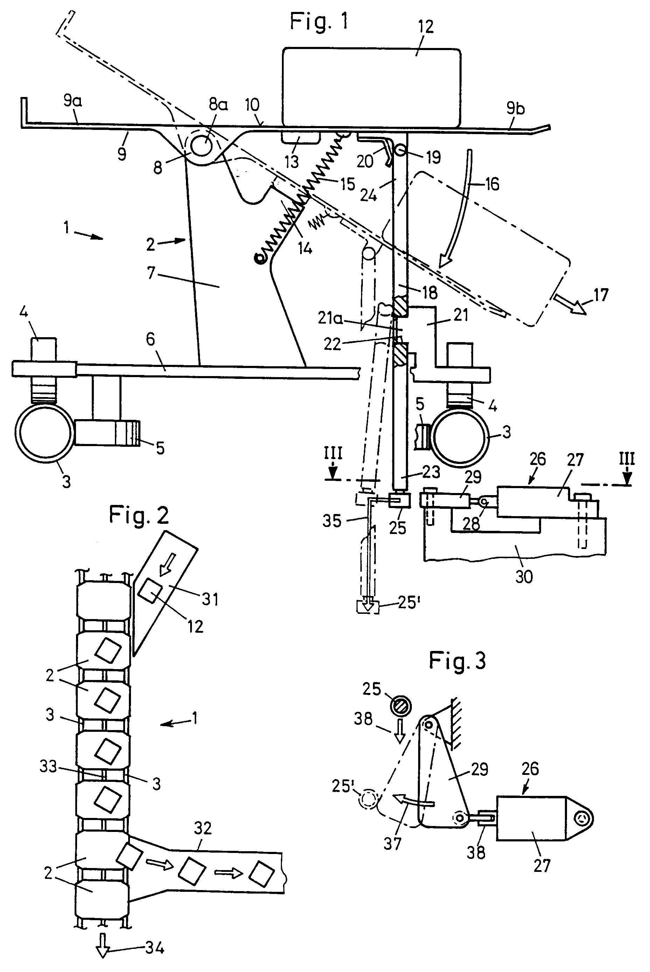

Der Verteilförderer 1 weist gemäss dem in Figur 2 gezeigten Abschnitt mehrere Wagen 2 auf, die mit einer hier nicht gezeigten Zugkette gelenkig miteinander verbunden und auf Schienen 3 geführt sind. Mit einer an sich bekannten Einschleusvorrichtung 31 können die Wagen 2 einzeln mit einem Gegenstand 12 beladen und an einer Entladestelle mit einer Ausschleusvorrichtung 32 entladen werden. Beim Laden und Entladen werden die Wagen 2 in der Regel ohne Geschwindigkeitsänderung in Richtung des Pfeiles 34 bewegt. Bei diesen Anwendungen besitzen die Lade- und Entladestationen mehrere Einschleus- und Ausschleusvorrichtung 31 bzw. 32.

In der Regel sind sämtliche Wagen 2 gleich ausgebildet. Wie die Figur 1 zeigt, weist jeder Wagen 2 ein Gestell 6 auf, an dem Tragrollen 4 und Führungsrollen 5 gelagert sind, die auf den Schienen 3 laufen. Das Gestell 6 ist mit der Zugkette verbunden. Antriebe und Führungen solcher Wagen 2 sind in unterschiedlichen Ausführungen dem Fachmann gut bekannt und werden deshalb hier nicht näher erläutert.

Auf dem Gestell 6 ist ein Träger 7 fest angebracht, der an einem oberen Ende ein Drehgelenk 8 mit einer horizontalen Achse 8a aufweist. Auf dieser Achse 8a ist eine Tragplatte 9 gelagert, die in der Ansicht gemäss Figur 1 links der Achse 8a einen Bereich 9a und rechts der Achse 8a einen grösseren Bereich 9b besitzt. Unterhalb des grösseren Bereichs 9b ist etwa mittig unterhalb der Tragplatte 9 ein Bein 18 angelenkt, das gegen die rücktreibende Kraft einer Blattfeder 20 um die horizontale Achse 19 nach links verschwenkbar ist. In der mit ausgezogenen Linien gezeigten vertikalen Position ist das Bein 18 an einem gestellfesten Träger 21 nach unten abgestützt. Dazu besitzt das Bein 18 etwa mittig eine Oeffnung 22, in die ein Nocken 21a eingreift. Die Feder 20, die unterhalb der Achse 19 am oberen Ende 24 des Beins 18 an diesem anliegt, hält das Bein 18 in der erwähnten Position. In dieser ist die Tragplatte 9 am Gestell 6 fest abgestützt und kann nicht um die Achse 8a verschwenkt werden.

Die Abstützung des Beines 18 am Nocken 21 kann gelöst werden, indem an einer Rolle 25, die an einem unteren Ende 23 des Beins 18 angebracht ist, quer zur Laufrichtung mit einem kurzen Stoss ein Drehmoment ausgeübt wird, wonach das Bein 18 um die Achse 19 in die strickpunktiert gezeigte Position verschwenkt wird. In dieser greift der Nocken 21 nicht mehr in die Oeffnung 22 ein, so dass das Bein 18 unterhalb der Achse 19 nicht mehr gestützt und frei ist.

Unterhalb des Bereichs 9b ist an der Tragplatte 9 eine Zugfeder 15 angeordnet, die am oberen Ende mit der Tragplatte 9 und an einem unteren Ende mit dem Träger 7 verbunden ist. Ist das Bein 18 durch den Nocken 21 abgestützt, so verharrt die Tragplatte 9 in der mit ausgezogenen Linien gezeigten Position und die Zugfeder 15 bleibt gespannt. Ist hingegen der Eingriff des Nockens 21 am Bein 18 aufgehoben, so verschwenkt die Feder 15 in Folge ihrer Zugkraft die Tragplatte 9 in Richtung des Pfeiles 16 um die Achse 8a, bis sie die in Figur 1 strickpunktiert gezeigte geneigte Lage einnimmt. Diese Endstellung ist durch einen Gummipuffer 13, der in dieser Endposition an einem Seitenarm 14 des Trägers 17 aufliegt bestimmt. Um die Tragplatte 9 zu neigen, genügt somit ein kurzer Stoss auf das Bein 18 vorzugsweise an dessen unterem Ende. Bei dem sich anschliessenden selbsttätigen Verschwenken der Tragplatte 9 wird ein auf dieser befindliche Gegenstand 12 ebenfalls nach unten in die strickpunktiert gezeigte Position verschwenkt und rutscht in Richtung des Pfeiles 17 von der Oberseite 10 der Tragplatte weg auf eine hier nicht gezeigte weitere Transportvorrichtung. Bei einem schweren Gegenstand 12 dient der Gummipuffer 13 als Dämpfung.

Zur Auslösung des genannten Stosses auf die Rolle 25 ist auf dessen Höhe gemäss Figur 1 ein Schalthebel 29 an einem Gestell 30 einer Entladestation angebracht, der beispielsweise mittels einer Zylinder-Kolbeneinheit 26 in Richtung des Pfeils 37 verschwenkbar ist. Wie die Figur 3 zeigt, ist der Schalthebel 29 am einen Ende um eine Schwenkachse 39 in Richtung des Pfeiles 37 in eine strichpunktiert gezeigte auslösende Position verschwenkbar. Dazu wird ein am Schalthebel 29 angelekter Kolben 28 aus dem Zylindergehäuse 27 ausgefahren. Bewegt sich nun ein Wagen 2 in Richtung des Pfeiles 38 gegen den ausgelenkten Schalthebel 29, so fährt die Rolle 25 des Beines 18 auf diesen Schalthebel 29 auf, und wird in die mit 25' gezeigte Position ausgelenkt. Die Tragplatte 9 wird dann sofort selbsttätig wie oben erläutert verschwenkt. Wird der Schalthebel 29 nicht in die strichpunkiert gezeigte Position verschwenkt, so fährt die Rolle 25 ohne Auslenkung an diesem vorbei. Zum Verschwenken des Schalthebels 29 wird die Einheit 26 über eine hier nicht gezeigte Steuerung aktiviert.

Die Spannkraft der Feder 15 ist so eingestellt, dass die Tragplatte 9 auch bei einem sehr leichten Gegenstand 12 sehr schnell verschwenkt wird. Die Tragplatte 9 wird auch dann verschwenkt, wenn sich der Gegenstand 12 vollständig im Bereich 9a befindet. Das Verschwenken der Tragplatte 9 erfolgt somit weitgehend unabhängig von Gewicht und der Position des Gegenstandes 12 etwa gleich schnell. Dies ist für die präzise Abgabe des Gegenstandes 12 beispielsweise an ein hier nicht gezeigtes weiterförderndes Band wesentlich. Der Gegenstand 12 kann somit beispielsweise auch ein leichter Postbrief sein, der irgendwo auf der Oberseite 10 der Platte 9 auf dieser aufliegt.

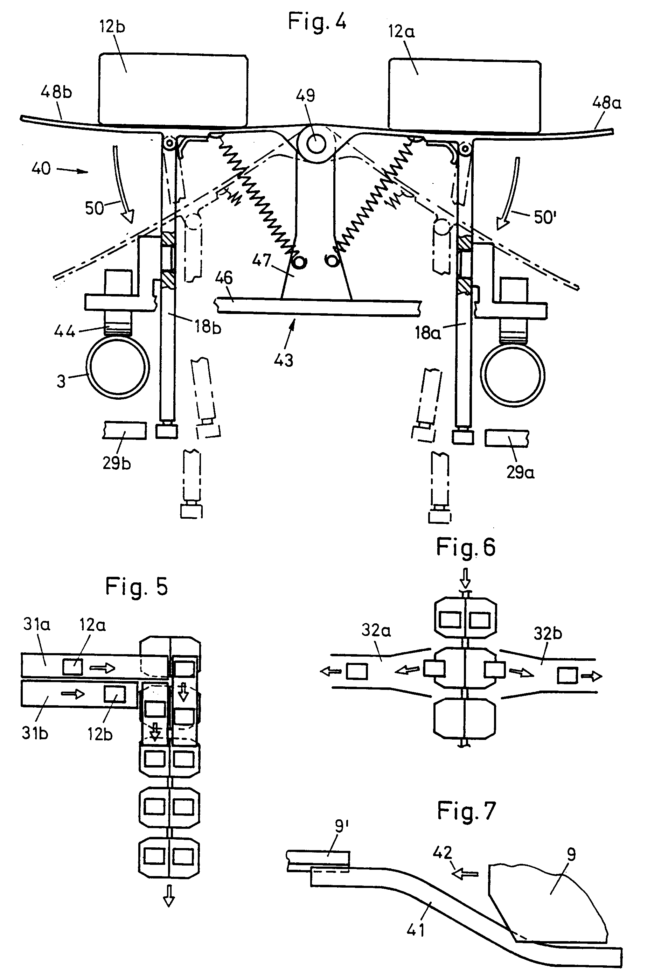

Um die verschwenkte Tragplatte 9 wieder in die horizontale Lage zu verschwenken, ist entlang der Bahn beispielsweise eine in Figur 7 gezeigte Führungsstange 41 angeordnet, auf welcher eine verschwenkte und in Richtung des Pfeiles 42 sich bewegende Tragplatte 9 auffährt und eine nach oben gerichtete Kraft erfährt, welche die Tragplatte in die mit 9' gezeigte Position bringt. Für die Rückstellung sämtlicher geneigter Tragplatten 9 genügt eine solche Stange 41.

Anhand der Figuren 4 bis 6 wird eine Variante eines Verteilförderers 40 erläutert. Bei diesem weist jeder Wagen 43 ebenfalls ein Gestell 46 auf, das mit Rollen 44 auf Schienen 3 geführt und beispielsweise mit einer Zugkette angetrieben ist. Im Unterschied zur oben gezeigten Ausführung weist der Wagen 43 jedoch am Träger 47 zwei unabhängig voneinander verschwenkbare Plattenteile 48a und 48b auf. Diese sind an einer gemeinsamen und horizontalen Schwenkachse 49 gelagert und in Richtung des Pfeiles 50 bzw. 50' in eine strichpunktiert gezeigte Lage verschwenkbar. Jeder der Plattenteile 48a bzw. 48b besitzt unterhalb dieser etwa mittig ein Bein 18a bzw. 18b, das in Bau und in Funktion genau dem oben genannten Bein 18 entsprechen kann. Die zum Verschwenken der Beine 18a bzw. 18b an Entladestellen angeordneten Schalthebeln 29a und 29b können ebenfalls vollständig dem oben genannten Schalthebel 29 entsprechen. Beim Verschwenken des Plattenteils 48a wird in der Ansicht gemäss Figur 4 ein auf diesem befindlicher Gegenstand 12b nach links und beim Verschwenken des Plattenteils 48b ein Gegenstand 12a nach rechts ausgeschleust. Die Gegenstände 12a und 12b können gemäss Figur 6 gleichzeitig an gegenüberliegende Transportvorrichtungen 32a und 32b oder auch nacheinander abgegeben werden. Das Einschleusen der Gegenstände 12a und 12b kann gemäss Figur 5 von der gleichen Seite mit Einschleusbändern 31a und 31b erfolgen. Denkbar ist jedoch auch eine Einschleusung von gegenüberliegenden Seiten des Verteilförderers. Gegenüber einem Wagen mit lediglich einer Tragplatte kann damit die Förderleistung im wesentlichen verdoppelt werden. Zur Rückstellung der Plattenteile 48a und 48b sind selbstverständlich wenigstens zwei hier nicht gezeigte Führungsstangen 41 erforderlich.

## Patentansprüche

1. Verteilförderer (1) für Stückgut (12) mit einer Vielzahl längs einer endlosen Bahn umlaufender Wagen (2, 43), von denen jeder eine mit einer an vorbestimmten Entladestellen (32) neigbaren Tragvorrichtung verbundene Platte (9) oder einen Plattenteil (48a, 48b) für das Stückgut (12) aufweist, wobei die Platte (9) resp. der Plattenteil (48a, 48b) mittels angelenktem Stützbein (18) einer am Wagen (2, 43) befestigten Stützvorrichtung (18, 21) in eine horizontale Lage abgestützt und durch eine quer zur Laufrichtung der Wagen auf das Stützbein (18) zustellbare Schaltvorrichtung (26) in die geneigte Lage versetzbar ist, dadurch gekennzeichnet, dass die Platte (9) resp. der Plattenteil (48a, 48b) zum Entladen lediglich in eine Richtung neigbar ist und durch Federkraft in Neigungsrichtung (16, 49, 50) gespannt und gegen die Spannkraft durch das an der Unterseite der Platte (9) resp. dem Plattenteil (48a, 48b) angelenkte Stützbein (18) der Abstützvorrichtung (18, 21) am Wagen (2, 43) abgestützt ist.

2. Förderer nach Anspruch 1, dadurch gekennzeichnet, dass das Stützbein (18) nach dem Auslenken in eine der Neigung der Platte (9) resp. des Plattenteils (48a, 48b) entsprechende tiefere seitliche Lage versetzt ist.

3. Förderer nach Anspruch 2, dadurch gekennzeichnet, dass das Stützbein (18) an einem oberen Ende mit der Platte (9) resp. dem Plattenteil (48a, 48b) verbunden ist und gegen eine Rückstellkraft einer Feder (20) auslenkbar ist.

4. Förderer nach einem der Ansprüche 1 bis 3, dadurch gekennzeichnet, dass der Wagen (43) wenigstens zwei Plattenteile (48a, 48b) aufweist, die quer zur Fahrtrichtung des Wagens (43) angeordnet sind und die beiden Plattenteile unabhängig voneinander in Fahrtrichtung gesehen nach links oder nach rechts neigbar sind.

5. Förderer nach einem der Ansprüche 1 bis 3, dadurch gekennzeichnet, dass der Wagen (2) lediglich eine Platte (9) aufweist, die in Fahrtrichtung gesehen auf eine Seite neigbar ist.

6. Förderer nach einem der Ansprüche 1 bis 5, dadurch gekennzeichnet, dass das Stützbein (18) an einem gestellfesten Träger (21) des Wagens abgestützt und zum Lösen der Stützvorrichtung durch eine Schwenkbewegung von dem Träger (21) lösbar ist.

7. Förderer nach einem der Ansprüche 1 bis 6, dadurch gekennzeichnet, dass die Schaltvorrichtung (26) einen Schalthebel (29) aufweist, der zum Neigen der Platte (9) bzw. eines Plattenteils (48a, 48b) in die Laufbahn eines Stützbeines (18) einschwenkbar ist.

8. Förderer nach einem der Ansprüche 1 bis 7, dadurch gekennzeichnet, dass das Stützbein (18) an dem auslenkbaren Ende durch eine Verlängerung zur Befestigung einer der Schaltvorrichtung (26) zugeordneten Rolle (25) ausgebildet ist.

9. Förderer nach einem der Ansprüche 1 bis 8, dadurch gekennzeichnet, dass die Platte (9) bzw. die Plattenteile (48a, 48b) mittels einer Zugfeder (15) in Neigungsrichtung (16, 49, 50) gespannt ist bzw. sind.

## Claims

1. Distributing conveyor (1) for piece goods (12), comprising a plurality of trucks (2, 43) circulating along an endless track, each of which has a plate (9) or plate part (48a, 48b) for the piece goods (12) connected to a carrying device which can be inclined at predetermined discharge points (32), the plate (9) or plate part (48a, 48b) being supported in a horizontal position by means of the hinged supporting leg (18) of a supporting device (18, 21) secured to the truck (2, 43) and being displaceable into the inclined position by means of a switching device (26) which can be fed towards the supporting leg (18) transversely to the direction of movement of the trucks, characterised in that the plate (9) or plate part (48a, 48b) can be inclined in only one direction for discharge and is tensioned in the direction of inclination (16, 49, 50) by elastic force and supported on the truck (2, 43) against the elastic force by means of the supporting leg (18) of the supporting device (18, 21) hinged on to the underside of the plate (9) or plate part (48a, 48b).

2. Conveyor according to claim 1, characterised in that, alter deflection, the supporting leg (18) is displaced into a lower lateral position corresponding to the inclination of the plate (9) or plate part (48a, 48b).

3. Conveyor according to claim 2, characterised in that the supporting leg (18) is connected at an upper end to the plate (9) or plate part (48a, 48b) and can be deflected against the resilience of a spring (20).

4. Conveyor according to one of claims 1 to 3, characterised in that the truck (43) has at least two plate parts (48a, 48b) arranged transversely to the direction of travel of the truck (43), and the two plate parts can be inclined independently of one another to the left or to the right as viewed in the direction of travel.

5. Conveyor according to one of claims 1 to 3, characterised in that the truck (2) has only one plate (9) which can be inclined to one side as viewed in the direction of travel.

6. Conveyor according to one of claims 1 to 5, characterised in that the supporting leg (18) is supported on a support (21) of the truck fixed to the frame and can be released from the support (21) by means of a swivel movement in order to release the supporting device.

7. Conveyor according to one of claims 1 to 6, characterised in that the switching device (26) has a control lever (29) which can be swivelled into the path of a supporting leg (18) in order to incline the plate (9) or a plate part (48a, 48b).

8. Conveyor according to one of claims 1 to 7, characterised in that the supporting leg (18) is formed at the deflecting end by an extension piece for securing a roller (25) associated with the switching device (26).

9. Conveyor according to one of claims 1 to 8, characterised in that the plate (9) or plate parts (48a, 48b) is/are tensioned in the direction of inclination (16, 49, 50) by means of a tension spring (15).

## Revendications

1. Transporteur de distribution (1) pour des objets (12) avec une pluralité de chariots (2, 43) circulant le long d'un rail sans fin, chacun d'eux comportant un plateau (9) relié à un dispositif porteur pouvant être incliné dans des stations de déchargement prédéfinies (32) ou une partie de plateau (48a, 48b) pour les objets (12), le plateau (9) ou la partie de plateau (48a, 48b) étant ce faisant appuyé(e) selon une position horizontale au moyen d'une béquille articulée (18) d'un dispositif d'appui (18, 21) fixé au chariot (2, 43) et pouvant être déplacé(e) dans la position inclinée par un dispositif de commande (26) adaptable sur la béquille (18) transversalement à la direction de déplacement des chariots, caractérisé en ce que le plateau (9) ou la partie de plateau (48a, 48b) n'est inclinable pour le déchargement que dans une seule direction et qu'il ou elle est serré(e) dans la direction d'inclinaison (16, 49, 50) par la force d'un ressort et, contre la force élastique, qu'il ou elle est appuyé(e) sur le chariot (2, 43) par la béquille (18) reliée de façon articulée à la face inférieure du plateau (9) ou de la partie de plateau (48a, 48b) du dispositif d'appui (18, 21).

2. Transporteur selon la revendication 1, caractérisé en ce que la béquille (18) est déplacée après le changement d'orientation vers une position latérale plus basse correspondant à l'inclinaison du plateau (9) ou de la partie de plateau (48a, 48b).

3. Transporteur selon la revendication 2, caractérisé en ce que la béquille (18) est reliée en une extrémité supérieure au plateau (9), ou à la partie de plateau (48a, 48b), et qu'elle peut modifier son orientation contre une force de rappel d'un ressort (20).

4. Transporteur selon l'une des revendications 1 à 3, caractérisé en ce que le chariot (43) comporte au moins deux parties de plateau (48a, 48b), qui sont disposées transversalement à la direction de déplacement du chariot (43), et en ce que les deux parties de plateau sont inclinables indépendamment l'une de l'autre vers la gauche ou vers la droite en considérant la direction de déplacement.

5. Transporteur selon l'une des revendications 1 à 3, caractérisé en ce que le chariot (2) ne comporte qu'un seul plateau (9), qui, en considérant la direction de déplacement, est inclinable vers un côté.

6. Transporteur selon l'une des revendications 1 à 5, caractérisé en ce que la béquille (18) est appuyée à un support fixe (21) du chariot et en ce qu'elle peut être désolidarisée du support (21) pour détacher le dispositif d'appui par un mouvement pivotant.

7. Transporteur selon l'une des revendications 1 à 6, caractérisé en ce que le dispositif de commande (26) comporte un levier de commande (29), qui peut être actionné dans la glissière d'une béquille (18) pour incliner le plateau (9) ou une partie de plateau (48a, 48b).

8. Transporteur selon l'une des revendications 1 à 7, caractérisé en ce que la béquille (18), en l'extrémité orientable, est conçue avec une rallonge pour que soit fixé un rouleau (25) associé au dispositif de commande (26).

9. Transporteur selon l'une des revendications 1 à 8, caractérisé en ce que le plateau (9) ou les parties de plateau (48a, 48b) est ou sont serré(es) dans la direction d'inclinaison (16, 49, 50) au moyen d'un ressort de traction (15).
